# FASCICULE DE BREVET EUROPEEN

(11) **EP 0 776 812 B1**
(45) Date de publication et mention de la délivrance du brevet: **16.08.2001**
(21) Numéro de dépôt: 96402336.0
(22) Date de dépôt: 04.11.1996
(51) Int. Cl.: B62D 1/18

(54) **Dispositif d'articulation d'une colonne de direction de véhicule automobile**
Gelenklager für eine Lenksäule eines Kraftfahrzeuges
Pivot bearing of a motor vehicle steering column

(30) Priorité: 17.11.1995 FR 9513761
(43) Date de publication de la demande: 04.06.1997
(73) Titulaire: NACAM France S.A., F-41100 Vendôme (FR)
(72) Inventeur: Dupont, Eddy, 41100 Vendome (FR); Blais, Jean René, 41100 Vendome (FR); Daviau, Charles, 41170 Sarge sur Braye (FR)
(74) Mandataire: Cabinet Martinet & Lapoux

(56) Documents cités:
- DE-A- 2 922 032
- DE-C- 3 924 015
- US-A- 4 895 391

## Description

La présente invention concerne un dispositif d'articulation d'une colonne de direction de véhicule automobile. La colonne de direction d'un véhicule automobile comporte généralement une partie reliée au volant, située dans l'habitacle, et le plus souvent connu, au voisinage du tablier séparant l'habitacle du compartiment moteur. De plus, il est nécessaire d'avoir un système d'étanchéité entre le compartiment moteur et l'habitacle.

Certains dispositifs prévoient une double fixation par boulons, qui sont disposés suivant un axe perpendiculaire à l'axe de direction. Chacun de ces boulons supporte une rondelle élastique qui est interposée avec la structure, afin de permettre une certaine articulation autour de cet axe, et de l'axe de direction.

D'autres systèmes existants utilisent une fixation autour d'un axe d'articulation perpendiculaire à l'axe de direction, avec l'interposition de rondelles élastiques, afin de permettre une articulation autour de cet axe de fixation, ainsi qu'une articulation limitée autour de l'axe de direction.

A l'un ou l'autre de ces dispositifs peut s'ajouter une coupelle élastique montée sur l'axe de direction qui porte un soufflet d'étanchéité et/ou de confinement acoustique.

Il existe également un autre type de dispositif comme celui du document US-A-4895391, qui comporte une articulation comprenant un élément sphérique convexe lié à l'axe de direction, qui se déplace dans un ensemble sphérique concave lié à la structure du véhicule.

Tous ces systèmes soit présentent l'inconvénient de nécessiter en plus un ensemble d'étanchéité, soit ne permettent pas une articulation dans tous les sens avec une garantie suffisante de fiabilité.

Le but de la présente invention est de proposer un dispositif d'articulation d'une colonne de direction de véhicule automobile, qui offre une articulation dans tous les sens avec en plus une liberté de déplacement axial, tout en assurant une étanchéité et un confinement acoustique ; et avec un encombrement minimal, qui permette un montage aisé sur les colonnes de direction existantes.

Selon l'invention, le dispositif d'articulation d'une colonne de direction de véhicule automobile comporte :
- un élément relié à un volant de direction du véhicule,
- un élément lié à une structure du véhicule, et
- un seul et même élément raccordant ledit élément relié au volant de direction et ledit élément lié à la structure et disposé entre eux, le seul et même, élément permettant une articulation sphérique, étant monobloc et permettant un déplacement axial entre les deux éléments, et assurant le confinement acoustique entre le compartiment moteur et l'habitacle dans le véhicule.

De plus, l'élément d'articulation selon l'invention comporte un système d'étanchéité entre le compartiment moteur et l'habitacle du véhicule.

L'élement d'articulation comporte au moins une garniture. L'élément d'articulation est solidaire de l'élément relié au volant de direction du vehicule, et il est solidaire de l'élément lié à la structure du véhicule.

Avantageusement, l'élément d'articulation selon l'invention la garniture est en élastomère.

Selon l'invention, différentes configurations de l'élément d'articulation sont possibles. Dans une première configuration, la garniture est montée directement et solidaire sur l'élément relié au volant de direction, et dans l'élément lié à la structure. Dans une autre configuration, la garniture est montée directement et solidaire sur l'élément relié au volant de direction, ladite garniture étant munie et solidaire d'une armature extérieure, qui est montée à force dans l'élément lié à la structure. Il est également possible d'avoir une autre configuration dans laquelle, la garniture est montée directement et solidaire dans l'élément lié à la structure, ladite garniture étant munie et solidaire d'une armature intérieure, qui est montée à force sur l'élément relié au volant de direction. Enfin, dans une autre configuration selon l'invention, la garniture est munie et solidaire d'une armature intérieure qui est montée à force sur l'élément relié au volant de direction, ladite garniture étant munie et solidaire d'une armature extérieure, qui est montée à force dans l'élément lié à la structure.

Selon un mode de réalisation particulièrement intéressant de l'invention, la garniture est munie et solidaire d'une armature intérieure, qui est montée à force sur le tube corps du véhicule constituant l'élément relié au volant de direction. Cette garniture est munie et solidaire d'une armature extérieure, qui est montée à force dans l'élément lié à la structure. La garniture et l'armature intérieure sont disposées axialement par rapport à l'armature extérieure, et à un logement pour l'armature extérieure ménagé dans l'élément lié à la structure de manière à permettre le déplacement axial de l'élément relié au volant de direction du véhicule.

Dans une variante de cette dernière réalisation, un roulement d'axe de direction du véhicule est monté dans l'armature intérieure de la garniture. Le système d'étanchéité consiste en une lèvre, qui prolonge radialement la garniture et vient s'appliquer sur l'axe de direction de manière à assurer l'étanchéité entre le compartiment moteur et l'habitacle dans le véhicule.

Selon un autre mode de réalisation de l'invention, qui offre un encombrement particulièrement réduit, la garniture est munie et solidaire d'une armature extérieure, qui est montée à force dans l'élément lié à la structure. Cette garniture est montée directement sur un roulement et solidaire avec ledit roulement d'axe de direction du véhicule, et l'armature extérieure a un retour, qui vient s'appliquer dans le fond d'un logement pour l'armature extérieure ménagé dans l'élément lié à la structure. Le roulement est disposé sur l'axe de direction par l'intermédiaire d'une bague. De plus, le système d'étanchéité consiste en une lèvre, qui prolonge radialement la garniture et vient s'appliquer sur la bague disposée entre le roulement et l'axe de direction.

Dans tous les modes de réalisation de l'invention décrits ci-dessus, l'élément lié à la structure du véhicule a un logement pour l'élément d'articulation qui peut être décalé transversalement par rapport à l'axe de transmission de la direction, c'est-à-dire l'axe de points fixant ledit élément lié à la structure sur la structure.

Le dispositif d'articulation selon l'invention, présente ainsi l'avantage de permettre un réglage angulaire dans toutes les directions du corps de colonne de direction par rapport à l'élément lié à la structure du véhicule. De plus, ce dispositif donne une liberté de déplacement axial entre le corps de colonne de direction et l'élément lié à la structure du véhicule. Il permet également d'encaisser les mouvements axiaux du pignon de direction sans charger le roulement. Il maintient aussi le confinement acoustique entre le compartiment moteur et l'habitacle du véhicule. De plus, il admet une précontrainte de montage induite par les dispersions de réalisation de la structure. Enfin, il peut assurer le retour en position nominale angulaire du corps de colonne, en adaptant la raideur de l'élément articulé, et/ou une précharge (précontrainte).

D'autres caractéristiques et avantages de l'invention ressortiront de la description qui va suivre, donnée à titre d'exemple nullement limitatif en référence aux dessins annexés sur lesquels :
- la figure 1 est une coupe axiale du dispositif d'articulation d'une colonne de direction de véhicule automobile selon l'invention ;
- la figure 2 est une coupe partielle d'une variante de réalisation de la figure 1 ;
- la figure 3 est une coupe partielle d'une autre variante de réalisation de la figure 1 ;
- la figure 4 est une coupe partielle d'une autre variante de réalisation de la figure 1 ;
- la figure 5 représente en coupe axiale un autre mode de réalisation du dispositif d'articulation d'une colonne de direction de véhicule automobile selon l'invention ;
- la figure 6 représente un mode de réalisation de l'élément lié à la structure du véhicule selon l'invention ; et
- la figure 7 représente un autre mode de réalisation de l'élément lié à la structure du véhicule.

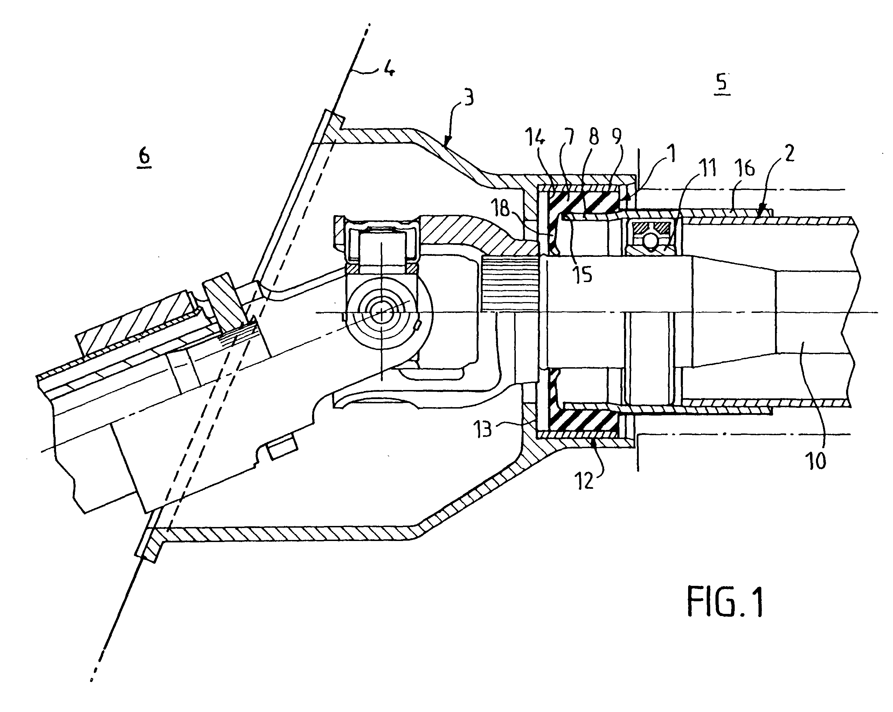

Comme on peut le voir sur les figures 1 à 5, le dispositif d'articulation d'une colonne de direction de véhicule automobile selon l'invention comporte :
- un élément 2 qui est relié au volant de direction du véhicule automobile,
- un élément 3 qui est lié à la structure 4 du véhicule automobile,
- un seul et même élément 1, qui raccorde les deux éléments 2 et 3 et est disposé et agencé entre eux.

L'élément 1 est un élément d'articulation sphérique, qui permet un déplacement axial entre les deux éléments 2 et 3, et assure de plus une étanchéité entre eux, et le confinement acoustique entre le compartiment moteur et l'habitacle.

Le dispositif d'articulation de la colonne d'une direction de véhicule selon l'invention qui est représenté sur la figure 1, comporte un élément d'articulation 1 qui est monté sur un élément 3 lié à la structure 4 du véhicule. L'élément 3 est constitué par une gamelle qui est fixée sur le tablier ou le pédalier appartenant à la structure du véhicule. L'élément d'articulation 1 est d'autre part monté sur un élément 2 relié au volant de direction du véhicule et constitué par le tube corps.

L'élément d'articulation 1 est une articulation monobloc, qui comporte une garniture 7 en élastomère. La garniture 7 est munie d'une armature intérieure 8, qui est solidaire avec la garniture 7. La garniture 7 est également munie d'une armature extérieure 9, qui est solidaire avec la garniture 7. L'armature extérieure 9 est montée à force dans un logement 12 ménagé dans l'élément 3 fixé sur la structure 4. L'armature extérieure 9 est montée de façon à venir toucher pratiquement le fond 13 du logement 12. D'autre part, la garniture 7 et l'armature intérieure 8 sont disposées axialement par rapport à l'armature extérieure 9 et au fond 13 du logement 12, de manière à permettre le déplacement axial de l'élément 2 relié au volant de direction du véhicule. L'armature intérieure 8 est munie d'un prolongement 16, qui vient se monter à force sur le tube corps 2. Un roulement 11 de l'axe de direction 10 est monté dans le prolongement 16 de l'armature intérieure. Comme on peut le voir en face du fond de logement 13 sur la figure 1, une extrémité 14 de la garniture 7 et une extrémité 15 de l'armature intérieure 8 sont décalées axialement par rapport à une extrémité de l'armature extérieure 9.

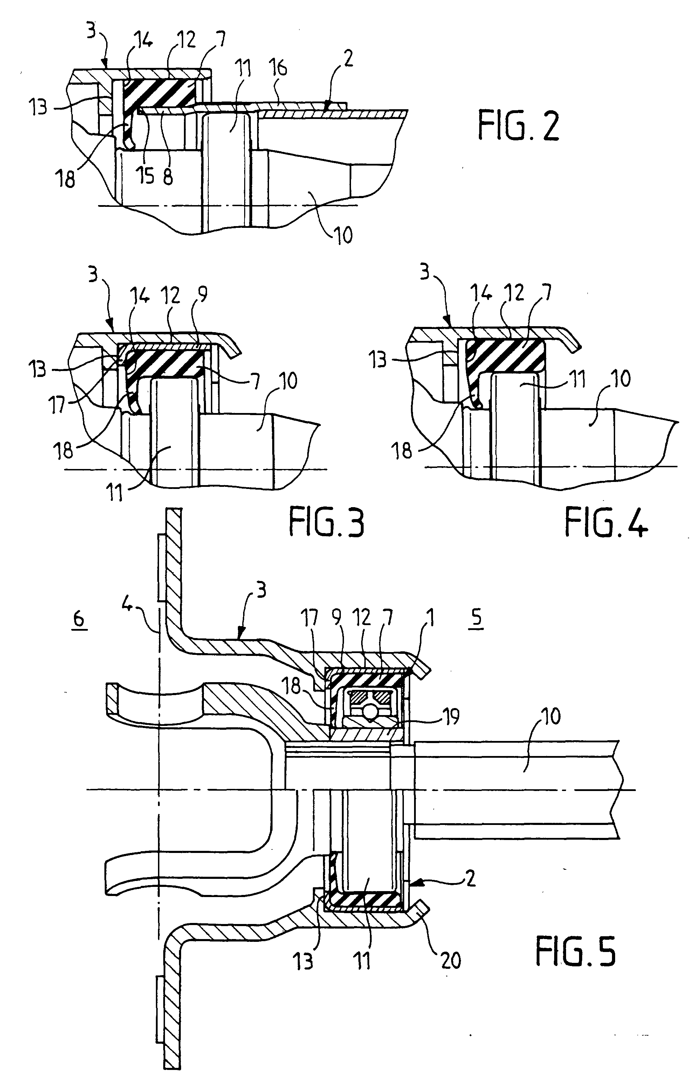

Dans la varainte de réalisation représentée sur la figure 2, le dispositif d'articulation comporte un élément d'articulation 1, qui est monobloc avec une garniture 7 en élastomère. La garniture 7 est montée directement dans l'élément 3 lié à la structure 4. La garniture 7 est également munie d'une armature intérieure 8, qui est montée sur l'élément 2 relié au volant et constitué par le tube corps. De plus l'extrémité 14 de la garniture 7 et l'extrémité 15 de l'armature intérieure 8 sont décalées axialement par rapport au fond 13 du logement 12 pour permettre le déplacement axial de l'élément 2 relié au volant de direction du véhicule.

Dans l'autre variante de réalisation de l'invention représentée sur la figure 3, l'élément d'articulation 1 est monobloc et comporte une garniture 7 en élastomère, qui est montée directement sur l'élément relié au volant et constitué par le roulement 11. La garniture 7 est munie d'une armature extérieure 9, qui est montée dans l'élément 3 lié à la structure 4. L'extrémité 14 de la garniture 7 est décalée axialement par rapport à l'armature extérieure 9 et par rapport au fond 13 du logement 12, afin de permettre le déplacement axial de l'élément relié au volant de direction du véhicule.

Dans l'autre variante de réalisation de l'invention représenté sur la figure 4, l'élément d'articulation 1 est monobloc et comporte une garniture 7 en élastomère, qui est montée directement sur l'élément relié au volant et constitué par le roulement 11. De plus, la garniture 7 est également montée directement dans le logement 13 de l'élément 3 lié à la structure 4. Dans cette variante de réalisation, l'extrémité 14 de la garniture 7 est décalée axialement par rapport au fond 13 du logement 12, de manière à permettre le déplacement axial de l'élément relié au volant de direction du véhicule.

Tous les modes de réalisation de l'invention représentés sur les figures 1 à 4, peuvent comporter un système d'étanchéité entre le compartiment moteur 6 et le compartiment habitacle 5 du véhicule. Ce système d'étanchéité est constitué par une lèvre 18, qui prolonge radialement la garniture 7. Cette lèvre 18 vient s'appliquer sur l'axe de direction 10, de manière à assurer l'étanchéité entre le compartiment moteur 6 et le compartiment habitacle 5 du véhicule.

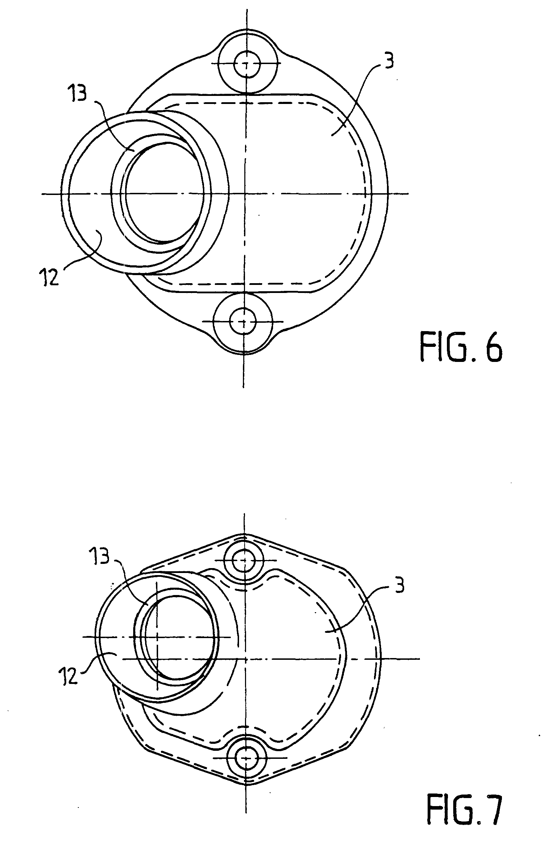

La figure 5 représente un autre mode de réalisation du dispositif d'articulation d'une colonne de direction de véhicule automobile selon l'invention. Dans cette configuration, l'élément d'articulation 1 est monobloc et comporte une garniture 7 en élastomère. La garniture 7 est munie d'une armature extérieure 9, qui est solidaire de la garniture 7. Cette armature extérieure 9 est montée à force dans l'élément 3 lié à la structure 4. L'élément 3 est constitué par une gamelle qui est montée sur la structure du véhicule constitué par la traverse ou le tablier du véhicule automobile. L'armature extérieure 9 comporte un retour 17, qui vient s'appliquer dans le fond 13 du logement 12 de l'élément 3 lié à la structure 4. Le montage de l'armature extérieure 9 dans le logement 13 se fait à force, et l'ensemble est maintenu en place par un retour 20 de l'élément 3. La garniture 7 est montée directement sur le roulement 11 de l'axe de direction 10, ledit roulement 11 étant solidaire avec la garniture 7. Le roulement 11 est monté sur l'axe de direction 10 par l'intermédiaire d'une bague 19. Ainsi, l'élément de l'invention relié au volant de direction est constitué dans ce cas par le roulement 11. Une lèvre 18 prolonge radialement la garniture 7, et vient s'appliquer sur la bague 19, qui est disposée entre le roulement 11 et l'axe de direction 10. La lèvre 18 assure ainsi l'étanchéité entre le compartiment moteur 6 et le compartiment habitacle 5 du véhicule.

La figure 6 représente un mode de réalisation de l'élément 3 lié à la structure 4 du véhicule et constitué par une gamelle. L'élément 3 comporte un logement 12 avec un fond 13 qui est monté sur l'axe de direction. Un autre mode de réalisation de l'élément 3 lié à la structure 4 du véhicule est représenté sur la figure 7. Dans cette configuration, l'élément 3 a son logement 12 avec son fond 13 qui sont décalés transversalement par rapport à l'axe des points de fixation de l'élément 3 sur la structre 4. Ainsi le dispositif d'articulation d'une colonne de direction de véhicule automobile selon l'invention présente l'avantage supplémentaire d'admettre une précontrainte de montage due aux dispersions de fixation. De plus, il permet le montage d'une conduite à droite ainsi que le montage d'une conduite à gauche dans les cas où les axes de colonnes de direction ne sont pas perpendiculaires à la traverse. Enfin, il admet des défauts de coaxialité.

## Revendications

1. Dispositif d'articulation d'une colonne de direction de véhicule automobile qui comporte :
- un élément (2, 11) relié à un volant de direction du véhicule,
- un élément (3) lié à une structure (4) du véhicule, et
- un seul et même élément (1) raccordant ledit élément relié au volant de direction et ledit élément lié à la structure et disposé entre eux,
- le seul et même élément (1) permettant une articulation sphérique,
- l'élément d'articulation (1) étant monobloc,
- l'élément d'articulation (1) étant d'une constitution qui permet un déplacement axial,
- l'élément d'articulation (1) étant d'une constitution qui assure un confinement acoustique entre un compartiment moteur (6) et un habitacle (5) dans le véhicule,
- l'élément d'articulation (1) comportant un système d'étanchéité entre le compartiment moteur (6) et le compartiment habitacle (5) dans le véhicule caractérisé en ce que :
- l'élément d'articulation (1) comporte au moins une garniture (7),
- l'élément d'articulation (1) est solidaire de l'élément (2) relié au volant de direction du véhicule, et
- l'élément d'articulation (1) est solidaire de l'élément (3) lié à la structure (4) du véhicule.

2. Dispositif d'articulation selon la revendication 1, caractérisé en ce que la garniture (7) est en élastomère.

3. Dispositif d'articulation selon la revendication 2, caractérisé en ce que la garniture (7) est montée directement sur l'élément (2) et solidaire de l'élément 2 relié au volant de direction et en ce que la garniture (7) est montée directement dans l'élément (3) et solidaire de l'élément 3 lié à la structure (4).

4. Dispositif d'articulation selon la revendication 2, caractérisé en ce que la garniture (7) est montée directement sur l'élément (2) et solidaire avec l'élément 2 relié au volant de direction, ladite garniture (7) étant munie et solidaire d'une armature extérieure (9) montée à force dans l'élément (3) lié à la structure (4).

5. Dispositif d'articulation selon la revendication 2, caractérisé en ce que la garniture (7) est montée directement dans l'élément (3) et solidaire avec l'élément 3 lié à la structure (4), ladite garniture (7) étant munie et solidaire d'une garniture intérieure (8) montée à force sur l'élément (2) relié au volant de direction.

6. Dispositif d'articulation selon la revendication 2, caractérisé en ce que la garniture (7) est munie et solidaire d'une armature intérieure (8) montée à force sur l'élément (2) relié au volant de direction, ladite garniture (7) étant munie et solidaire d'une armature extérieure (9) montée à force dans l'élément (3) lié à la structure (4).

7. Dispositif d'articulation selon la revendication 2, caractérisé en ce que la garniture (7) est munie et solidaire d'une armature intérieure (8) montée à force sur un tube corps (2) constituant ledit élément relié au volant de direction, ladite garniture (7) étant munie et solidaire d'une armature extérieure (9) montée à force dans l'élément (3) lié à la structure (4) ; la garniture (7) et l'armature intérieure (8) étant disposées axialement par rapport à l'armature extérieure (9) et à un logement (12) pour l'armature extérieure ménagé dans l'élément (3) lié à la structure (4) de manière à permettre le déplacement axial de l'élément (2) relié au volant de direction.

8. Dispositif d'articulation selon la revendication 7, caractérisé en ce qu'un roulement (11) d'axe de direction (10) du véhicule est monté dans l'armature intérieure (8) de la garniture (7).

9. Dispositif d'articulation selon l'une quelconque des revendications 2 à 8, comprenant une lèvre d'étanchéité (18) qui prolonge radialement la garniture (7) et vient s'appliquer sur un axe de direction (10) du véhicule, de manière à assurer l'étanchéité entre un compartiment moteur (6) et un compartiment habitacle (5) dans le véhicule.

10. Dispositif d'articulation selon la revendication 2, caractérisé en ce que la garniture (7) est munie et solidaire d'une armature extérieure (9) montée à force dans l'élément (3) lié à la structure (4) du véhicule, ladite garniture (7) étant montée directement sur un roulement (11) et solidaire avec le roulement (11) d'axe de direction (10) du véhicule, et l'armature extérieure (9) ayant un retour (17) venant s'appliquer dans le fond (13) d'un logement (12) pour l'armature extérieure ménagé dans l'élément (3) lié à la structure (4), ledit roulement (11) étant disposé sur l'axe de direction (10) par l'intermédiaire d'une bague (19).

11. Dispositif d'articulation selon la revendication 10, comprenant une lèvre d'étanchéité (18) qui prolonge radialement la garniture (7) et vient s'appliquer sur la bague (19) disposée entre le roulement (11) et l'axe de direction (10) du véhicule, de manière à assurer l'étanchéité entre le compartiment moteur (6) et le compartiment habitacle (5) dans le véhicule.

12. Dispositif d'articulation selon l'une quelconque des revendications précédentes, caractérisé en ce que l'élément (3) lié à la structure (4) du véhicule a un logement (12) pour ledit élément d'articulation (1), qui est décalé transversalement par rapport à l'axe de points fixant ledit élément (3) lié à la structure sur la structure (4).

## Patentansprüche

1. Anlenkvorrichtung für die Lenksäule eines Kraftfahrzeugs, umfassend:
- ein Bauteil (2, 11), das mit dem Lenkrad des Fahrzeugs verbunden ist,
- ein Bauteil (3), das mit einem Teil (4) des Fahrzeugs verbunden ist, und
- ein einziges Bauteil (1), das das genannte, mit dem Lenkrad verbundene Bauteil mit dem genannten, mit dem Fahrzeugteil verbundenen Bauteil verbindet und zwischen ihnen angeordnet ist,
- wobei das einzige Bauteil (1) eine kugelgelenkartige Verbindung ermöglicht,
- wobei das Anlenkteil (1) aus einem Stück besteht,
- wobei das Anlenkteil (1) derart beschaffen ist, dass es eine Verschiebung in Achsenrichtung ermöglicht,
- wobei das Anlenkteil (1) derart beschaffen ist, dass es eine akustische Trennung zwischen dem Motorraum (6) und dem Fahrgastraum (5) des Fahrzeugs sicherstellt,
- wobei das Anlenkteil (1) ein Dichtungssystem zwischen dem Motorraum (6) und dem Fahrgastraum (5) im Fahrzeug umfasst, dadurch gekennzeichnet, dass:
- das Anlenkteil (1) mindestens eine Dichtung (7) aufweist,
- das Anlenkteil (1) mit dem Teil (2) fest verbunden ist, das mit dem Lenkrad des Fahrzeugs verbunden ist, und
- das Anlenkteil (1) mit dem Bauteil (3) fest verbunden ist, das mit dem Teil (4) des Fahrzeugs verbunden ist.

2. Anlenkvorrichtung nach Patentanspruch 1, dadurch gekennzeichnet, dass die Dichtung (7) aus einem Elastomer besteht.

3. Anlenkvorrichtung nach Patentanspruch 2, dadurch gekennzeichnet, dass die Dichtung (7) direkt am Bauteil (2) angebracht und mit dem Bauteil (2) fest verbunden ist, das mit dem Lenkrad verbunden ist, und dadurch, dass die Dichtung (7) direkt im Bauteil (3) angebracht und mit dem Bauteil (3) fest verbunden ist, das mit dem Fahrzeugteil (4) verbunden ist.

4. Anlenkvorrichtung nach Patentanspruch 2, dadurch gekennzeichnet, dass die Dichtung (7) direkt am Bauteil (2) angebracht und mit dem Bauteil (2) fest verbunden ist, das mit dem Lenkrad verbunden ist, wobei die genannte Dichtung (7) mit einem äußeren Mantel (9) versehen und fest verbunden ist, der im Bauteil (3) zwangsmontiert ist, das mit dem Fahrzeugteil (4) fest verbunden ist.

5. Anlenkvorrichtung nach Patentanspruch 2, dadurch gekennzeichnet, dass die Dichtung (7) direkt im Bauteil (3) angebracht und mit dem Bauteil (3) fest verbunden ist, das mit dem Fahrzeugteil (4) verbunden ist, wobei die genannte Dichtung (7) mit einem inneren Mantel (8) versehen und fest verbunden ist, der am Bauteil (2) zwangsmontiert ist, das mit dem Lenkrad fest verbunden ist.

6. Anlenkvorrichtung nach Patentanspruch 2, dadurch gekennzeichnet, dass die Dichtung (7) mit einem inneren Mantel (8) versehen und fest verbunden ist, der am Bauteil (2) zwangsmontiert ist, das mit dem Lenkrad fest verbunden ist, wobei die genannte Dichtung (7) mit einem äußeren Mantel (9) versehen und fest verbunden ist, der im Bauteil (3) zwangsmontiert ist, das mit dem Fahrzeugteil (4) fest verbunden ist.

7. Anlenkvorrichtung nach Patentanspruch 2, dadurch gekennzeichnet, dass die Dichtung (7) mit einem inneren Mantel (8) versehen und fest verbunden ist, der an einem Rohrkörper (2) zwangsmontiert ist, der das genannte Bauteil darstellt, das mit dem Lenkrad verbunden ist, wobei die genannte Dichtung (7) mit einem äußeren Mantel (9) versehen und fest verbunden ist, der im Bauteil (3) zwangsmontiert ist, das mit dem Fahrzeugteil (4) fest verbunden ist; wobei die Dichtung (7) und der innere Mantel (8) relativ zum äußeren Mantel (9) und zu einer Aufnahme (12) für den äußeren Mantel axial angeordnet ist, welche Aufnahme im Bauteil (3) ausgebildet ist, das mit dem Fahrzeugteil (4) verbunden ist, derart, dass die axiale Verschiebung des mit dem Lenkrad verbundenen Bauteils (2) ermöglicht wird.

8. Anlenkvorrichtung nach Patentanspruch 7, dadurch gekennzeichnet, dass ein Wälzlager (11) der Lenkwelle (10) des Fahrzeugs im inneren Mantel (8) der Dichtung (7) angebracht ist.

9. Anlenkvorrichtung nach irgendeinem der Patentansprüche 2 bis 8, eine Dichtungslippe (18) umfassend, die die Dichtung (7) radial verlängert und sich an die Lenkwelle (10) des Fahrzeugs anlegt, um die Abdichtung zwischen dem Motorraum (6) und dem Fahrgastraum (5) im Fahrzeug sicherzustellen.

10. Anlenkvorrichtung nach Patentanspruch 2, dadurch gekennzeichnet, dass die Dichtung (7) mit einem äußeren Mantel (9) versehen und fest verbunden ist, der im Bauteil (3) zwangsmontiert ist, das mit dem Teil (4) des Fahrzeugs fest verbunden ist, wobei die genannte Dichtung (7) direkt auf einem Wälzlager (11) der Lenkwelle (10) des Fahrzeugs angebracht und mit dem Wälzlager (11) fest verbunden ist, wobei der äußere Mantel (9) über eine Krempe (17) verfügt, die sich an den Boden (13) einer Aufnahme (12) für den äußeren Mantel anlegt, der im mit dem Fahrzeugteil (4) verbundenen Bauteil (3) ausgebildet ist, wobei das genannte Wälzlager (11) mittels eines Ringes (19) auf der Lenkwelle (10) angeordnet ist.

11. Anlenkvorrichtung nach Patentanspruch 10, eine Dichtungslippe (18) umfassend, die die Dichtung (7) radial verlängert und sich an den Ring (19) anlegt, der zwischen dem Wälzlager (11) und der Lenkwelle (10) des Fahrzeugs angeordnet ist, um die Abdichtung zwischen dem Motorraum (6) und dem Fahrgastraum (5) im Fahrzeug sicherzustellen.

12. Anlenkvorrichtung nach irgendeinem der vorangehenden Patentansprüche, dadurch gekennzeichnet, dass das mit dem Fahrzeugteil (4) des Fahrzeugs verbundene Bauteil (3) über eine Aufnahme (12) für das genannte Anlenkteil (1) verfügt, die quer zur Achse der Punkte versetzt ist, die das genannte mit dem Fahrzeugteil verbundene Bauteil (3) an dem Fahrzeugteil (4) befestigt.

## Claims

1. A device for articulating a steering column of an automobile vehicle which comprises:
- a member (2, 11) joined to a steering wheel of the vehicle,
- a member (3) joined to a structure (4) of the vehicle, and
- a single member (1) connecting said member joined to the steering wheel and said member joined to the structure and disposed between them,
- the single member (1) enabling a spherical articulation,
- the articulation member (1) being monobloc,
- the articulation member (1) having a constitution enabling an axial displacement,
- the articulation member (1) having a constitution providing an acoustical isolation between an engine compartment (6) and a passenger compartment (5) in the vehicle,
- the articulation member (1) comprising a sealing system between the engine compartment (6) and the passenger compartment (5) in the vehicle, the device being characterized in that :
- the articulation member (1) comprises au least one bush (7),
- the articulation member (1) is fixed to the member (2) joined to the steering wheel of the vehicle, and
- the articulation member (1) is fixed to the member (3) joined to the structure (4) of the vehicle.

2. The articulation device according to claim 1, characterized in that the bush is in elastomer.

3. The articulation device according to claim 2, characterized in that the bush (7) is mounted directly on the member (2) and is fixed to the member (2) joined to the steering wheel and in that the bush (7) is mounted directly in the member (3) and is fixed to the member (3) joined to the structure.

4. The articulation device according to claim 2, characterized in that the bush (7) is mounted directly on the member (2) and is fixed to the member (2) joined to the steering wheel, said bush (7) being provided with and fixed to an exterior armature (9) force-fitted in the member (3) joined to the structure (4).

5. The articulation device according to claim 2, characterized in that the bush (7) is mounted directly in the member (3) and is fixed to the member (3) joined to the structure (4), said bush (7) being provided with and fixed to an interior armature (8) force-fitted on the member (2) joined to the steering wheel.

6. The articulation device according to claim 2, characterized in that the bush (7) is provided with and is fixed to an interior armature (8) force-fitted on the member (2) joined to the steering wheel, said bush (7) being provided with and fixed to an exterior armature (9) force-fitted in the member (3) joined to the structure (4).

7. The articulation device according to claim 2, characterized in that the bush (7) is provided with and fixed to an interior armature (8) force-fitted on a body tube (2) constituting said member joined to the steering wheel, said bush (7) being provided with and fixed to an exterior armature force-fitted in the member (3) joined to the structure (4) ; the bush (7) and the interior armature (8) being offset axially relative to the exterior armature (9) and to a housing (12) for the exterior armature made in the member (3) joined to the structure (4) thereby enabling axial displacement of the member (2) joined to the steering wheel.

8. The articulation device according to claim 7, characterized in that a bearing (11) of steering shaft (10) of the vehicle is mounted in the interior armature (8) of the bush (7).

9. The articulation device according to anyone of claims 2 to 8, comprising a sealing lip (18) that radially extends the bush (7) and is pressed against a steering shaft (10) of the vehicle to provide a seal between an engine compartment (6) and a passenger compartment (5) in the vehicle.

10. The articulation device according to claim 2, characterized in that the bush (7) is provided with and fixed to an exterior armature (9) force-fitted in the member (3) joined to the structure (4) of the vehicle, said bush (7) being mounted directly on a bearing (11) and being fixed to the bearing (11) of steering shaft (10) of the vehicle, and the exterior armature (9) having a rim (17) pressed against an end wall (13) of a housing (12) for the exterior armature made in the member (3) joined to the structure (4), said bearing (11) being mounted on the steering shaft (10) by means of a ring (19).

11. The articulation device according to claim 10 comprising a sealing lip (18) that radially extends the bush (7) and is pressed against the ring (19) disposed between the bearing (11) and the steering shaft (10) of the vehicle to provide a seal between the engine compartment (6) and the passenger compartment (5) in the vehicle.

12. The articulation device according to anyone of the preceding claims, characterized in that the member (3) joined to the structure (4) of the vehicle has a housing (12) for said articulation member (1) that is offset transversely relative to an axis of the points fixing said member (3) joined to the structure on the structure (4).
